# EUROPEAN PATENT SPECIFICATION

(11) **EP 1 031 778 B1**
(45) Date of publication and mention of the grant of the patent: **22.02.2006**
(21) Application number: 99500249.0
(22) Date of filing: 23.12.1999
(51) Int. Cl.: F16K 31/60, F16K 27/06

(54) **Actuator fitting for a valve**
Befestigung von einem Aktor an einem Ventil
Fixation d'un actioneur sur un robinet

(30) Priority: 23.02.1999 ES 9900474 U
(43) Date of publication of application: 30.08.2000
(73) Proprietor: Genebre, S.A., 08908 l'Hospitalet de Llobregat (Barcelona) (ES)
(72) Inventor: Monterde Fabregat, Luis, 08908 L'Hospitalet de Llobregat (Barce.) (ES)
(74) Representative: Pastells Teixido, Manuel

(56) References cited:
- DE-B- 1 033 980
- GB-A- 2 312 265
- US-A- 4 035 093
- US-A- 4 125 128

## Description

The present invention refers to a valve.

This valve is of the type whose control spindle can be actuated in a direct way, such as for example with a handle, or else can be actuated through a pneumatic actuator or the like.

Since there are different types of actuators and since they have different diameters, with the present valves that are prepared to receive only one type of actuator it is necessary to fit complementary parts to change from one to another diameter of the actuator, this forcing as well to arrange on the control spindle a supplemental extension. All this is very complex and does besides raise the cost of the operations to be carried out to fit an actuator to the valve.

It is the object of this invention to solve this problem by adapting the valve so that it can directly receive more than one type of adapter with different diameters.

Characteristic for such a purpose is the fact that the neck of the valve body, is provided around its opening with an amply dimensioned flat having radially provided oblong holes for the passage of the screws being provided to fasten the actuator, said screws being provided to be fitted into the threaded holes provided for such a purpose in the base of the actuator which is to be juxtaposed onto said flat of the neck corresponding to the valve body.

Since in the case of the bigger diameters of the base of the actuator the threaded holes provided in it do also generally have a bigger diameter, it has been foreseen to provide said oblong holes with sides that converge towards the centre of said neck.

These and other characteristics will be best made apparent by the following detailed description whose understanding will be made easier by the accompanying sheet of drawings showing a practical embodiment cited only by way of an example not limiting the scope of the present invention.

In the drawings:

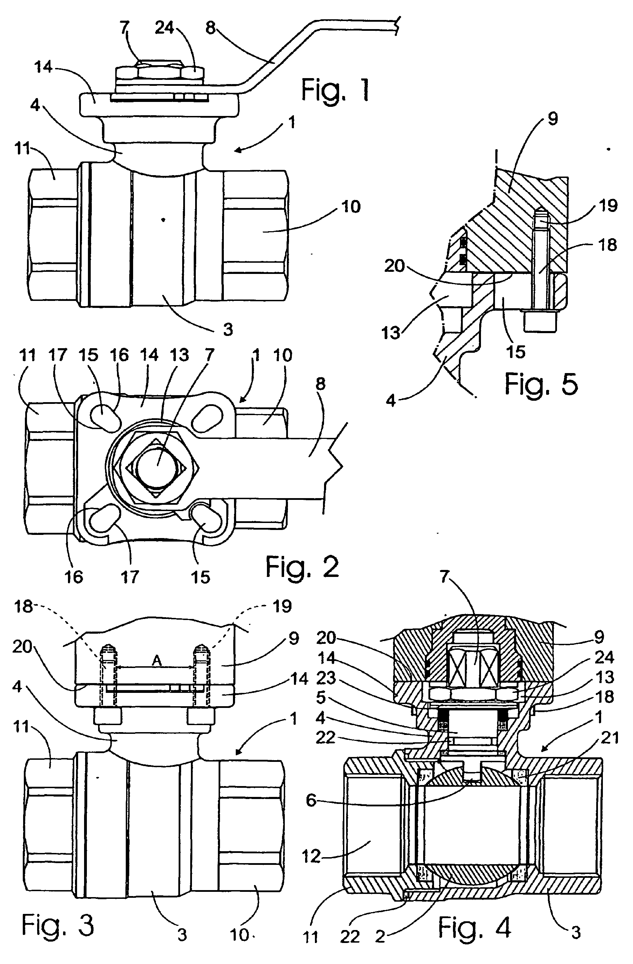

Figs. 1 and 2 do respectively show in an elevational view and in a plan view the valve in question having a handle fitted to its control spindle,
Figs. 3 and 4 do respectively illustrate in an elevational view and in a longitudinal section the valve having an actuator fitted to its control spindle, and
Fig. 5 is a detail in elevational section illustrating how the actuator is fitted to the neck of the valve body.

According to the drawings the valve 1 is of the type having a globe or ball 2 and comprising a tubular body 3 being radially provided with a neck 4 through which projects the control spindle 5 provided to be fitted at one end 6 to the globe or ball 2 and to be fitted at the other end 7 to an actuating handle 8 or to a pneumatic actuator 9 or the like.

The body 1 forms at one end an opening 10 for the passage of the fluid, and at the opposite end is closed with a bonnet 11 formed by a bush determining the opening 12 also provided for the passage of the fluid.

The neck 4 of the valve body is characteristically provided around its opening 13 with an amply dimensioned quadrangular, flat flaring 14 that is provided at each of its corners with an oblong hole 15 whose sides 16 and 17 converge towards the centre of the neck 4.

The particular configuration of these holes allows to directly fit onto the flat 14 of the valve neck the actuator 9 by means of screws 18 passing through said base 20 of the actuator.

The radial arrangement of these oblong holes and the convergence of their sides allow to fit to the valve actuators with different distances A between their threaded holes 19 and with different diameters of the screws 18.

The valve is completed with the pertinent components and accessories such as the spherical seats 21, seals 22, spring washers 23, nuts 24, packing, rings and other elements.

It is to be understood that the valve can be of any other type besides the globe type having been represented.

## Claims

1. A valve (1) whose control spindle (5) is apt to be directly actuated by means of a handle (8) or through an actuator (9) being fitted to it, **characterised in that** the neck (4) of the body (3) of the valve (1) is provided around its opening (13) with an amply dimensioned flat (14) having radially provided oblong holes (15) for the passage of the screws (18) being provided to fasten the actuator (9).

2. A valve as per claim 1, **characterized in that** said oblong holes (15) have their sides (16, 17) converging towards the centre of said neck (4).

## Patentansprüche

1. Ventil (1), dessen Stellspindel (5) wahlweise direkt mittels eines Handgriffs (8) bzw. durch die Ankopplung einer Betätigungseinrichtung (9) betätigt wird; **dadurch gekennzeichnet, daß** der Hals (4) des Körpers (3) des Ventils (1) eine sich um seine Öffnung (13) großflächig erstreckende, flache Ausweitung (14) aufweist, die mit zum Durchlaß der die Betätigungseinrichtung (9) aufspannenden Schrauben (18) dienenden Langlöchern (15) versehen ist.

2. Ventil (1) nach Anspruch 1, **dadurch gekennzeichnet, daß** die obengenannten Langlöcher (15) ihre Seiten (16, 17) in einer nach dem Mittelpunkt des obengenannten Halses (4) zusammenlaufenden Anordnung aufweisen.

## Revendications

1. Vanne (1) dont l'axe de commande (5) est actionné indifféremment de manière directe moyennant une manette (8) ou par l'intermédiaire de l'accouplement d'un actuateur (9), **caractérisée en ce que** le col (4) du corps (3) de la vanne (1) présente, autour de sa bouche (13), un ample plan (14) dans lequel des orifices allongés (15) sont pratiqués radialement pour le passage des vis (18) qui doivent fixer l'actuateur (9).

2. Vanne (1), d'après la revendication 1, **caractérisée en ce que** lesdits orifices oblongs (15) présentent leurs côtés (16, 17) en convergence vers le centre dudit col (4).
